# EUROPEAN PATENT SPECIFICATION

(11) **EP 4 424 035 B1**
(45) Date of publication and mention of the grant of the patent: **15.10.2025**
(21) Application number: 22797792.3
(22) Date of filing: 27.10.2022
(51) Int. Cl.: H04W 4/021, H04W 4/33, H04W 4/029, H04W 4/80, G07C 9/28, H04W 12/64, H04W 12/08, G07C 9/20

(54) **A METHOD FOR CONTROLLING PEOPLE FLOW WITHIN A CONTROL AREA**
VERFAHREN ZUR STEUERUNG DES PERSONENFLUSSES IN EINEM STEUERBEREICH
PROCÉDÉ DE COMMANDE DE FLUX DE PERSONNES À L'INTÉRIEUR D'UNE ZONE DE COMMANDE

(30) Priority: 28.10.2021 CH 0704602021
(43) Date of publication of application: 04.09.2024
(73) Proprietor: dormakaba Schweiz AG, 8153 Rümlang (CH)
(72) Inventor: STUDERUS, Paul, 8165 Oberweningen (CH)
(74) Representative: Rentsch Partner AG
(86) International application number: PCT/EP2022/080151
(87) International publication number: WO 2023/073144

(56) References cited:
- EP-A1- 3 680 687
- CN-A- 110 060 442
- US-A1- 2020 334 931

## Description

### Field of the Invention

The present invention relates to a method for controlling people flow within a control area using one or more UWB detection device(s) associated with the control area. The present invention further relates to an UWB detection device configured for carrying out the method for controlling people flow as well as a people flow control system comprising one or more UWB detection devices. Furthermore, the present invention relates to a computer program product comprising computer-executable instructions which, when executed by a processing unit of an UWB detection device, causes the UWB detection device to carry out the method for controlling people flow.

### Background of the Invention

Entry systems have become widely used in applications in particular for access control in building facilities. Access control relates to granting, denying or limiting access to particular section(s) of a controlled area, usually by means of some level of access control by use of a barrier, such as a door, turnstile, parking gate, elevator door, or other barrier.

Various prior art systems are known for access control based on various principles using corresponding technologies. According to a first known approach, referred to as "who you are", access control is aimed to be achieved by identifying the individuals themselves, implemented using biometric identification technologies. One particular biometric identification technology used for people flow control uses face recognition to identify individuals. While face recognition technology has its merits, it is prone to error and is therefore often unreliable. Furthermore, face recognition technology has proven to be greatly affected by face covering, being for cultural and/or hygienic reasons. Alternative particular biometric identification technology used for access flow control uses fingerprint to identify individuals. Such is however disadvantageous as fingerprint recognition is often unreliable (slow, affected by the dryness of one's skin) and is particularly disadvantageous as it requires contact with a frequently used surface (the fingerprint reader).

According to a further known approach, referred to as "what you have", access control is based on identifying individuals using something the user possesses, referred to as a token or authentication device. Particularly advantageous are keyless entry systems due to their convenience and/or reliability. Keyless entry systems operate in that an UWB detection device executes a wireless communication with an authentication device, such as a keyless fob, a keycard or an authentication device incorporating a corresponding wireless transceiver. Once said wireless communication between the UWB detection device and the authentication device has been executed, the UWB detection device exchanges data messages with the authentication device. The authentication can be initiated either by a user, for instance by pressing a button on the authentication device to trigger transmission of authentication data to the UWB detection device, or from the UWB detection device itself which periodically transmits request signals and awaits a response message from the authentication device comprising authentication data. Upon successful authentication, i.e. verification of user credentials (e.g. by correlating authentication data received from the authentication device with a list of authorized users), the UWB detection device grants access to the user in possession of the respective authentication device, e.g. by opening said barrier. On the other hand, if the authentication fails, the UWB detection device denies access to the user in possession of the respective authentication device, e.g. by locking the barrier/ by keeping the barrier locked.

For close-range applications, a radio-frequency identification (RFID) transponder (or tag) is often used, which has mostly replaced earlier magnetic stripe cards. Other current solutions use infra-red systems or radio systems to transmit an authenticating signal from an authentication device to an UWB detection device of a security control system. Close-proximity keyless systems, (i.e. between direct contact and a threshold of a few centimeters), for example RFID based systems, allow determination of a user's proximity to a barrier by appropriate placement of a reader device of the UWB detection device. However, as their name implies close-proximity keyless systems suffer from the disadvantage that they require a very close proximity of the authentication device to the UWB detection device. In order to overcome this disadvantage, mid-range keyless entry systems have been proposed, in particular based on ultra-wideband UWB communication. Ultra-wideband UWB systems are advantageous since they allow reliable mid-range communication without a user having to precisely identify the reader device. As the communicating range between an authentication device and an UWB detection device increases, the convenience and ease-of-use increases, because the authentication device does not need to be placed in very close range, such as less than one centimeter from the UWB detection device. The user no longer needing to precisely locate the UWB detection device (or its antenna) not only adds convenience but also has the potential to speed up the process, thereby increasing the throughput through a barrier.

Potentially overlapping with but not identical to access control is the field of people flow control. People flow refers to the manner in which individuals move in and around a control area, such as a building or part of a building, between and within buildings. Controlling the flow of people (also referred to as people flow control or flow control) within a control area is of great importance for reasons of safety, security, efficient use of infrastructure as well as for the comfort and well-being of the people entering, exiting or present in the control area. People flow control relates to effecting some level of control on how people move in and around the control area, including guidance and/or enforcement. In contrast to access control - whereby access is granted/denied upon identification - people flow control comprises tracking movement within the control area after granting access into the controlled area, and depending on use case, take appropriate action based on said tracking.

Various prior art systems are known aimed at controlling the flow of people using similar technologies to those employed for access control, such as biometrics or keyless systems. It shall be noted that people flow control based on an authentication device controls the people flow by means of controlling the flow of authentication device(s) associated with people.

CN110060442A discloses a UWB-based method for preventing accidental entry of personnel in a station, whereby, in a first step, maintenance personnel is identified and a maintenance activity to be performed by the respective personnel is retrieved. Thereafter, based on a location of a faulty equipment, a task destination is determined. Based on the task destination, a so-called activity area authority of the maintenance personnel is verified. Once the activity area authority has been confirmed, a path from a present location to a destination area - comprising the faulty equipment - is determined. Thereafter, the maintenance personnel is provided with guidance (e.g. voice guidance) corresponding to the determined path, a dangerous area reminder being generated if the maintenance personnel approaches a dangerous area, namely a live area within an electric power (sub) station. If the maintenance personnel ignores the guidance and even the dangerous area reminder, electric fences are closed and an alarm is generated.

EP3680687A1 describes an UWB positioning system that includes UWB beacons and tags for indoor positioning, focusing on improving power efficiency by adjusting the rate of signal exchanges between UWB beacons and tags based on the tags' movement and location. The system is aimed at enhancing accuracy in tracking objects or individuals within indoor spaces, adapting the communication frequency to optimize battery life and operational efficiency. EP3680687A1 mentions potential integration of UWB technology with other security and building management systems to further enhance location precision and control

However, known people flow control methods/ systems suffer from lack of flexibility to adapt to various use cases, lack of convenience and/or lack of sufficient/ efficient people flow control. In particular, known people flow control methods/ systems are not able to adapt to current occupancy.

### Summary of the Invention

It is an object of embodiments disclosed herein to provide an improved method for controlling people flow within a control area.

Applicant has recognized that at least one reason for the drawbacks of known methods/ systems for people flow control lies in that such do not take in consideration the location of the people within the control area. Hence, it is a particular object of embodiments disclosed herein to provide a method for controlling people flow within a control area which takes into account the location of people within the control area.

According to the present invention, this object is addressed by the features of the independent claim 1. In addition, further advantageous embodiments follow from the dependent claims and the description.

According to embodiments of the present invention, the above-mentioned objects are addressed by a method for controlling people flow within a control area using one or more UWB detection device associated with the control area. In a first step, ultra-wideband transmissions are executed with an authentication device using one or more ultra-wideband transceiver(s) of the UWB detection device(s).

Thereafter, a location of the authentication device relative to one or more checkpoint(s) within the control area is determined. The checkpoint(s) are defined within the control area at locations of particular interest, such as at the border between particular section(s) of the control area. According to embodiments, checkpoint(s) are associated (e.g. 1-1) with the UWB detection device(s). In particular, the checkpoint(s) being associated with the physical location of the UWB detection device(s) within the control area, respectively with the physical location of UWB antennae of the UWB detection device(s).

The location of the authentication device within the control area is determined by processing signal properties of the one or more ultra-wideband transmissions.

According to embodiments of the present invention, the UWB detection device is configured to determine the location(s) of the authentication device(s) within the control area by processing signal properties of the ultra-wideband UWB transmissions such as propagation time, amplitude difference and/or phase difference of the ultra-wideband transmissions. Determining the location(s) of the authentication device(s) within the control area by processing signal properties of the ultra-wideband UWB transmissions is advantageous since it allows a reliable and precise localization.

Determining the location of the authentication device based on the propagation time of an ultra-wideband transmission comprises measuring the time required for a signal to travel from the ultra-wideband transceiver to an ultra-wideband communication module of the authentication device and/or the time required for a signal to travel from the authentication device to the ultra-wideband transceiver. In a particular embodiment, a time difference is used as a basis for determining the distance, as it is more secure against spoofing attacks, wherein a third party may use a radio relay device to gain unauthorized access to a location or system in a so-called "relay-attack". Depending on the embodiment, the time difference is a "one-way time-of-flight" time difference between the ultra-wideband transceiver sending the request value and the authentication device receiving the request value, or a "round-trip time-of-flight" time difference, in which a second transmission takes place from the authentication device to the ultra-wideband transceiver either prior to, or after the first transmission of the request value. In the "one-way time-of-flight" scenario, the ultra-wide-band transceiver and the authentication device need to be provided with tightly synchronized clocks for accurately determining the location. In the latter case of a "round-trip time-of-flight" calculation, there is stored, either in the authentication device or the ultra-wideband transceiver, an accurate representation of the processing time, i.e. the time it takes between the reception of an ultra-wideband transmission and the sending of a response ultra-wideband transmission, which processing time allows for accurately determining the distance. Measurement of a time required for the signal to travel from the ultra-wideband transceiver to the authentication device and back "round-trip time-of-flight" is advantageous as it does not require the precise synchronization of clock signals of the ultra-wideband transceiver and the authentication device.

Determining the location of the authentication device based on amplitude difference, comprises determining the difference in signal amplitude between the signal transmitted by the ultra-wideband transceiver and the signal received by the authentication device (or vice-versa). By taking into consideration the attenuation of the signal, the distance between the ultra-wideband transceiver and the authentication device is calculated.

Determining the location of the authentication device based on phase difference comprises detecting the difference in signal phase between the signal transmitted by the ultra-wideband transceiver and the signal received by the authentication device. By taking into consideration the change in signal phase, the distance between the ultra-wideband transceiver and the authentication device is determined. It is to be understood that for the amplitude difference and phase difference, alternatively, the signal may also be transmitted by the authentication device and received by the ultra-wideband transceiver.

Subsequent, preceding or simultaneous to localizing it, the authentication device is also identified, in particular by exchanging authentication data using the ultra-wideband transmissions between the UWB detection device(s) and the authentication device

Having determined the location of the authentication device relative to one or more checkpoint(s) and having identified the authentication device, access rights data associated with the authentication device is determined. According to a first embodiment of the present invention, access rights data is determined by a query to a data store. The data store is part of any one of the UWB detection device(s)/ the people flow control system and/or communicatively connected thereto, such as a building management system.

Alternatively, or additionally, access rights data associated with the authentication device is determined by processing access rights data received from the authentication device itself, for example by means of the ultra-wideband transmissions established therewith.

Thereafter, having determined the location of the authentication device and the associated access rights data, flow control data is generated based on the access rights data and based on the location of the authentication device. The flow control data comprises indication(s) of locations, directions and/or particular sections within the control area where a user associated with the authentication device is permitted, recommended and/or denied access, presence and/or passage. For example, the indication(s) of the flow control data are generated as a sorted list of a sequence of locations, directions and/or particular sections within the control area.

The flow control data can be conveyed according to several alternative or cumulative embodiments. According to an embodiment, a human-interpretable representation of at least a part of the flow control data is generated. The human-interpretable representation comprises one or more of: a visual, audible and/or haptic representation of indication(s) of locations, directions and/or particular sections within the control area where a user associated with the authentication device is permitted, recommended and/or denied access, presence and/or passage. According to embodiments, the representation is only partially human-interpretable, in that the representation also comprises a machine-readable representation, such as a barcode. After being generated, the human-interpretable representation of at least a part of the flow control data is output to the user of the authentication device. For example, the human-interpretable representation in the form of a visual indication is output on a display of an entry/ exit barrier arranged within the control area, such as displaying a number indicating an elevator to take or an identification of an assigned meeting room.

Alternatively, or additionally, at least a part the flow control data and/or the human-interpretable representation thereof is transmitted to the authentication device to be output by the authentication device, such as a display, speaker or haptic device comprised by or connected to the authentication device.

It is an object of the present invention to provide flow control data that is able to adapt to a current occupancy of the control area. This further object is addressed in that flow control data is generated in accordance with a presence list of authentication device(s) already present within the control area and/or within particular section(s) of the control area. The presence list is retrieved from a data store internal to or communicatively accessible by one or more of the UWB detection device(s) or the flow control system. In particular, this object is addressed by denying access to the authentication device if a number of other authentication device(s) already present within the control area and/or within particular section(s) of the control area is greater than or equal to a threshold occupancy; and by
granting access to the authentication device if the number of other authentication device(s) already present within the control area and/or within particular section(s) of the control area is less than the threshold occupancy. Such embodiments are advantageous for example when a threshold occupancy is imposed due to health regulations, for ensuring comfort of occupants and/or secure evacuation in case of an emergency.

In order to keep the presence list up to date, according to further embodiments, the presence list is updated based on detecting, using one or more of the UWB detection device(s), of entry and/or exit of authentication device(s) into/ out of the control area and/or particular section(s) of the control area. In particular, the presence list is updated by: detecting, using one or more of the UWB detection device(s), entry and/or exit of authentication device(s) into/ out of the control area and/or particular section(s) of the control area; recording an identification of the authentication device(s) onto the presence list upon detection of entry; and by removing the identification of the authentication device from the presence list upon detection of exit. Alternatively, or additionally, the presence list is updated by incrementing the number of authentication device(s) already present upon detection of entry; and by decrementing the number of authentication device(s) already present upon detection of exit.

It is an object of further embodiments disclosed herein to enable providing flow control data which takes into account different kinds of individuals present, entering or leaving the control area or particular section(s) thereof. This object is addressed in that one or more attribute(s) associated with the authentication device are determined upon detection and identification of the authentication device. Correspondingly, the presence list (of authentication devices already present in the control area) is categorized in accordance with the one or more attributes. Furthermore, the presence list is updated upon detection of entry or exit into respectively out of the control area or particular section(s) thereof in accordance with the attributes of the authentication device(s) entering or exiting.

Depending on the particular use case, the attributes associated with authentication devices comprise indications whether the user of the authentication device is vaccinated or not, is a registered personnel of the control area or a visitor, is a maintenance staff or administrator of the control area, respectively of the people flow control system. Having determined the one or more attribute(s) associated with the authentication device upon detection and identification of the authentication device, the flow control data is generated in accordance with the categorized presence list and in accordance with the one or more attribute(s) of the authentication device. For example, personnel or administrators of a control area are provided different indication(s) than visitors. In particular, personnel or administrators may be granted access as opposed to visitors if the number of authentication device(s) - and hence people - within the control area or a section thereof - exceeds the threshold occupancy. As a further example, people possessing authentication devices associated with an attribute indicative of a valid vaccination certificate are directed -by means of flow control data - to a different section of the control area than people who lack a valid vaccination certificate.

According to further embodiments of the present invention, the flow control data generated comprises data indicative of a transit path. A transit path comprises data identifying one or more checkpoint(s) and/or one or more section(s) of the control area delimited by one or more checkpoint(s). In particular, a transit path comprises data indicative of adjoining sections of the control area and/or adjoining checkpoints that link the determined location of the authentication device to a destination area. The destination area relates to either a particular section of the control area and/or a specific checkpoint. In order to generate flow control data indicative of a transit path, a destination area associated with the authentication device is determined upon its identification. The destination area may be determined by a query to a data store (comprised by and/or communicatively connected to one or more of the UWB detection device(s) and/or the people flow control system), the data store comprising data identifying a destination area associated with the authentication device, such as its owner's office, an allocated meeting room based on a calendar/ schedule associated with the owner of the authentication device. Alternatively, or additionally, data indicative the destination area is transmitted by the authentication device, in particular using the ultra-wideband transmission(s) executed with one or more of the UWB detection device(s).

Having determined the destination area, the transit path within the control area is calculated according to various parameters, the transit path T providing a virtual route within the control area between a checkpoint associated with the location of the authentication device and the checkpoint associated with the destination area D.

According to embodiments of the present invention, occupancy data within the control area is retrieved for optimizing the transit path based on the occupancy data and the destination area. Such embodiments are advantageous since for example congestions and overcrowding of particular section(s) of the control area may be avoided or at least reduced. Occupancy data is retrieved by means of a query to a data store (comprised by and/or communicatively connected to one or more of the UWB detection device(s) and/or the people flow control system). According to particular embodiments, the occupancy data comprises an indication of the occupancy level of one or more of a plurality of transport means within the control area, such as a plurality of elevators. Having available the occupancy level of one or more of a plurality of transport means within the control area, the step of optimizing the transit path based on the occupancy data and the destination area comprises determining a target transport means. Correspondingly, the flow control data comprises an indication of the target transport means plurality of transport means, such as an indication of which elevator to take based on the occupancy level of a plurality of elevators within the control area.

It is an object of further embodiments to provide flow control data that accommodates access restrictions within the control area. This object is addressed by determining access restriction(s) associated with the UWB detection device - upon its identification - and by generating the transit path such as not to violate the access restriction(s). According to a particular embodiment, the access restriction(s) comprises an indication of restricted section(s) of the control area, relative to one or more of the checkpoint(s) and/or defined by one or more checkpoint(s). Correspondingly, the transit path is determined to provide a virtual route within the control area between a checkpoint associated with the location of the authentication device and the checkpoint associated with the destination area D while avoiding restricted section(s).

According to even further embodiments, the access restriction(s) comprises an indication of restricted user interaction(s), i.e. the presence of two authentication devices within the same section(s) of the control area. Correspondingly, the transit path is determined such as not to intersect the transit path(s) associated with any of the authentication device(s) identified by the restricted user interaction(s). Alternatively, or additionally, the **Fehlerl Keine gültige Verknüpfung.**such that the transit path does not comprise section(s) of the control area where any of the authentication device(s) identified by the restricted user interaction(s) is/are located, wherein the location of authentication device(s) identified by the restricted user interaction(s) is determined by one or more of the UWB detection device(s).

It is an object of further embodiments to ensure compliance of users with the flow control data. This further object is addressed by repeatedly determining, by the UWB detection device(s), the location of the authentication device relative to one or more checkpoint(s) within the control area by processing signal properties of the one or more ultra-wideband transmissions; and by enforcing people flow within the control area. In particular, enforcing people flow within the control area comprises comparing the location of the authentication device with the flow control data and generating an alert signal indicative of a deviation of the location of the authentication device from the flow control data. The alert signal may comprise one or more of: an audible, a visual, a haptic alert and/or an electronic data alert to a system communicatively connected to the flow control system.

In order to provide an even stricter enforcement of the people flow, enforcing people flow within the control area comprises generating control signals to restrict movement of the user of the authentication device relative to checkpoint of the control area according to the flow control data. According to an embodiment, control signals are generated for the control of one or more barriers arranged within the control area, each barrier being configured to be able to physically restrict or even prevent passage of a user (and hence the authentication device carried by the user) from one section of the control area to another.

In order to enforce a transit path (of the flow control data), control signals are generated for the control of transport means within the control area. For example, control signals are generated which determine the destination floor of elevator(s) upon detection of the respective authentication device within the elevator. Correspondingly, UWB detection device(s) are arranged such as to be able to detect the presence of an authentication device within the elevator.

It is a further object of the present invention to provide an improved UWB detection device for controlling people flow within a control area. According to the present invention, this object is addressed by the features of claim 14. In particular, this object is addressed by a UWB detection device, comprising a processing unit and one or more ultra-wideband transceiver(s), the UWB detection device being configured for carrying out the method for controlling people flow within a control area according to one of the embodiments disclosed herein.

It is a further object of the present invention to provide an improved system for controlling people flow within a control area. According to the present invention, this object is addressed by the features of claim 15. In particular, this object is addressed by a people flow control system comprising a processing unit, one or more UWB detection device(s), each UWB detection device comprising one or more ultra-wideband transceiver(s), the people flow control system being configured for carrying out the method for controlling people flow within a control area according to one of the embodiments disclosed herein. It is a further object of the present invention to provide a computer program product for improved control of people flow within a control area. According to the present invention, this object is addressed by the features of claim 16**.** In particular, thus object is addressed by a computer program product comprising computer-executable instructions which, when executed by a processing unit of a people flow control system comprising one or more UWB detection device(s), each UWB detection device comprising one or more ultra-wideband transceiver(s), causes the people flow control system to carry out the method according to one of the embodiments disclosed herein.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### Brief Description of the drawings

The herein described disclosure will be more fully understood from the detailed description given herein below and the accompanying drawings which should not be considered limiting to the disclosure described in the appended claims. The drawings in which:
- Figure 1A:: shows a highly schematic perspective view of a people flow control system associated with a control area according to the present invention;
- Figure 1 B:: shows a highly schematic perspective view of an array of checkpoints associated with the control area of figure 1A;
- Figure 1C:: shows a highly schematic perspective view of a further embodiment of checkpoints associated with the control area of figure 1A;
- Figure 2:: shows a highly schematic perspective view of a further embodiment of a people flow control system according to the present invention, illustrating denial of entry for the holder of an authentication device based on a number of authentication devices already present within the control area exceeding a threshold occupancy;
- Figure 3:: shows a highly schematic perspective view of a further embodiment of a people flow control system according to the present invention, illustrating updating of a presence list of authentication device(s) already present within the control area upon entry and/or exit of authentication device(s) into/ out of the control area;
- Figure 4:: shows a highly schematic perspective view of a further embodiment of a people flow control system according to the present invention, illustrating generation of people flow control data in accordance with attributes associated with authentication devices;
- Figure 5:: shows a highly schematic perspective view of a further embodiment of a people flow control system according to the present invention, illustrating generation of a transit path (as part of people flow control data) from the location of the authentication device to a destination area based on occupancy level of one or more of a plurality of transport means within the control area;
- Figure 6:: shows a highly schematic perspective view of a further embodiment of a people flow control system according to the present invention, illustrating generation of a transit path (as part of people flow control data) from the location of the authentication device to a destination area based access restrictions associated with the authentication device;
- Figure 7:: shows a highly schematic perspective view of a further embodiment of a people flow control system according to the present invention, illustrating generation of a transit path (as part of people flow control data) from the location of the authentication device to a destination area in a multi-story building, the transit path comprising both a pathway as well as indication of an elevator supplied with control signals to enforce the people flow by controlling a destination of the elevator according to the transit path;
- Figure 8:: shows a highly schematic block diagram of a UWB detection device according to the present invention;
- Figure 9A:: shows a highly schematic block diagram of a first embodiment of an authentication device according to the present invention comprised by a smartphone;
- Figure 9B:: shows a highly schematic block diagram of a further embodiment of an authentication device according to the present invention comprised by a tag (such as a key tag or badge);
- Figure 10:: shows a highly schematic block diagram of an embodiment of a people flow control system according to the present invention;

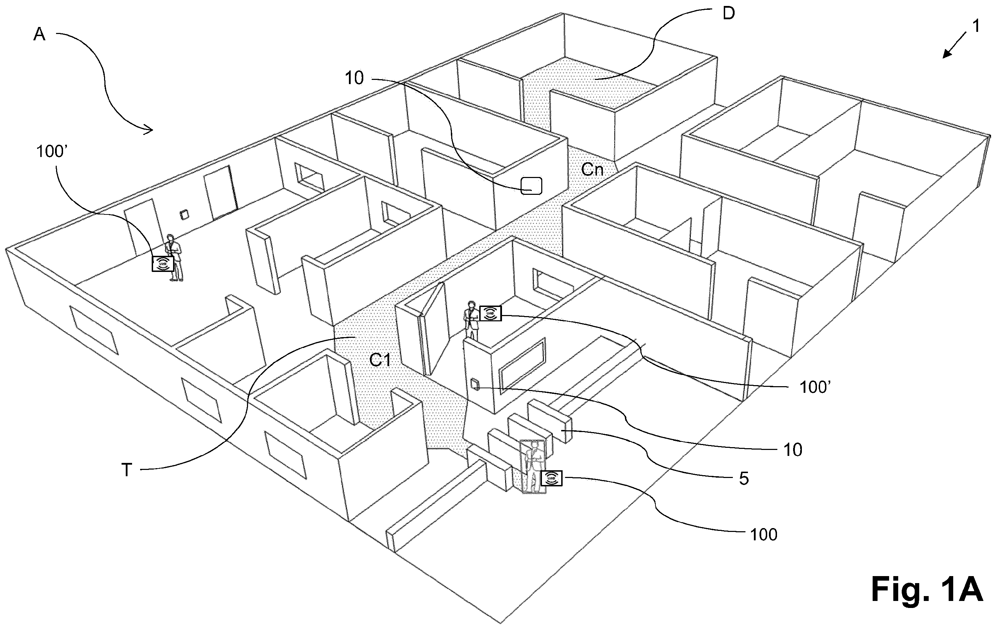

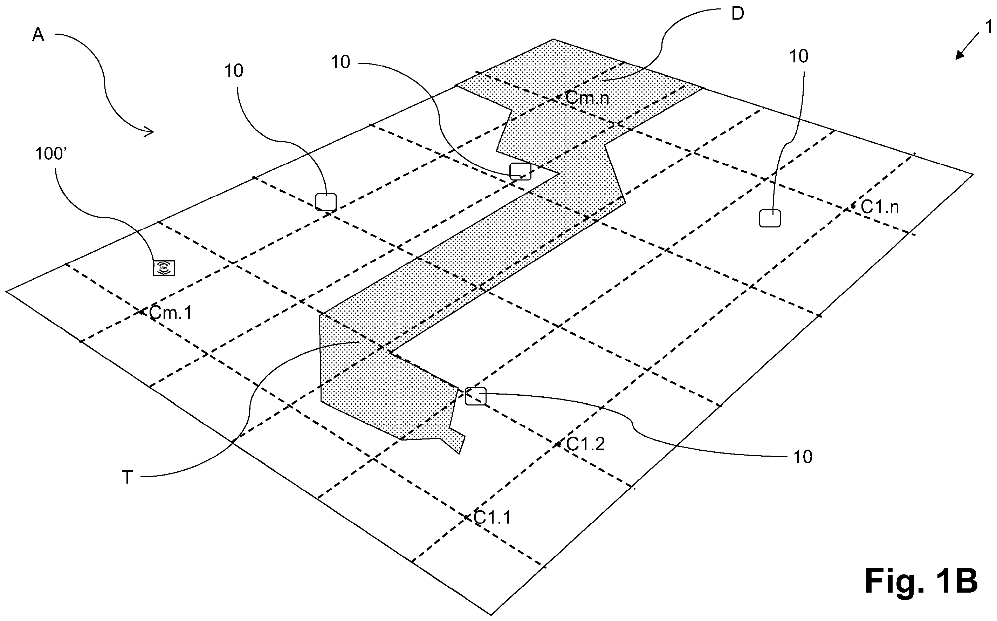

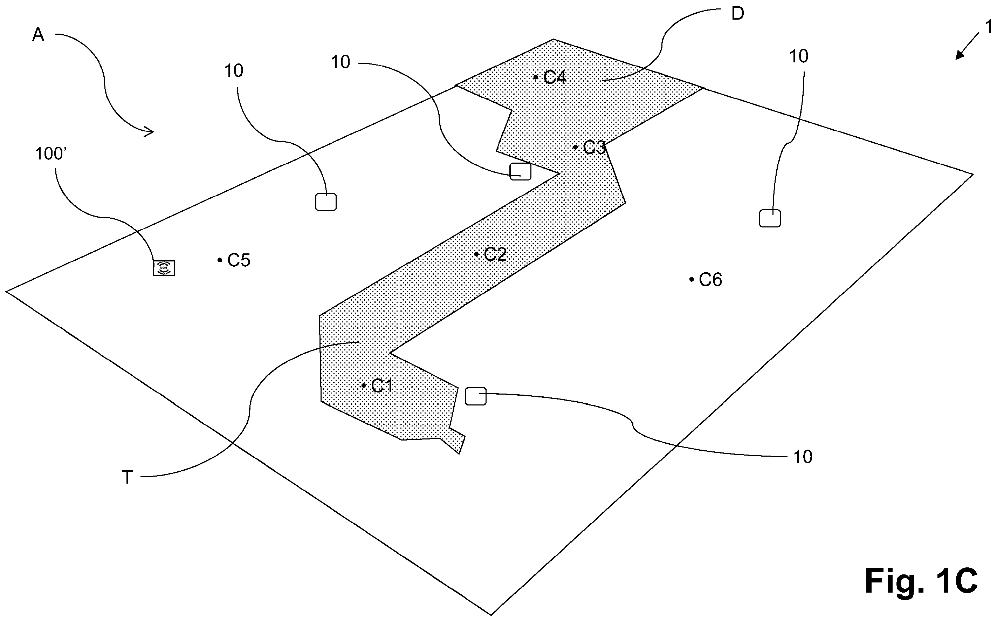

- Figure 1 1:: shows a first embodiment of a method for controlling people flow within a control area according to the present invention;

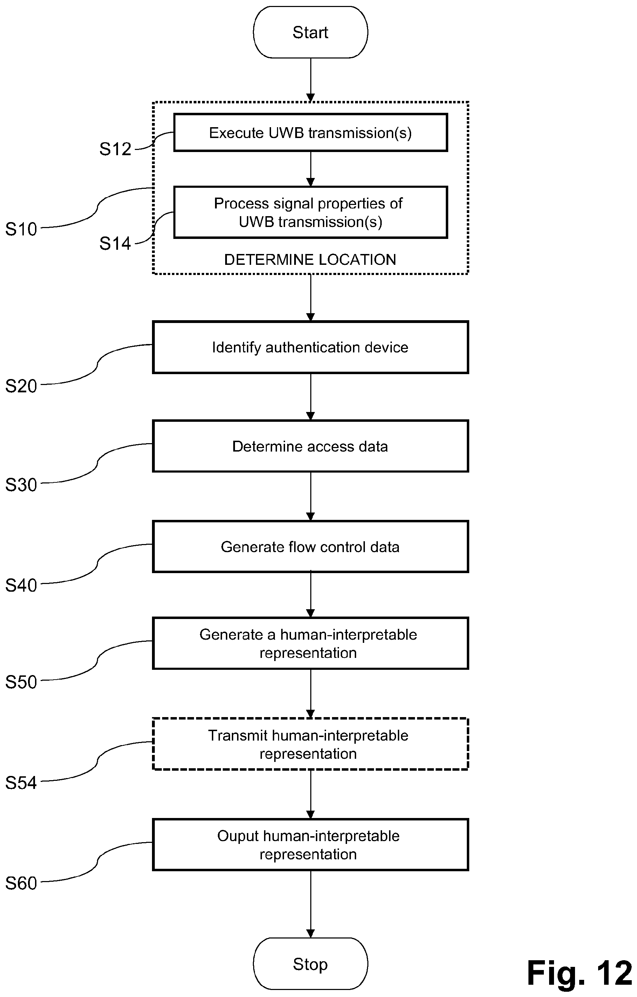

- Figure 12:: shows a further embodiment of a method for controlling people flow within a control area according to the present invention, comprising the generation of a human-interpretable representation of the flow control data;

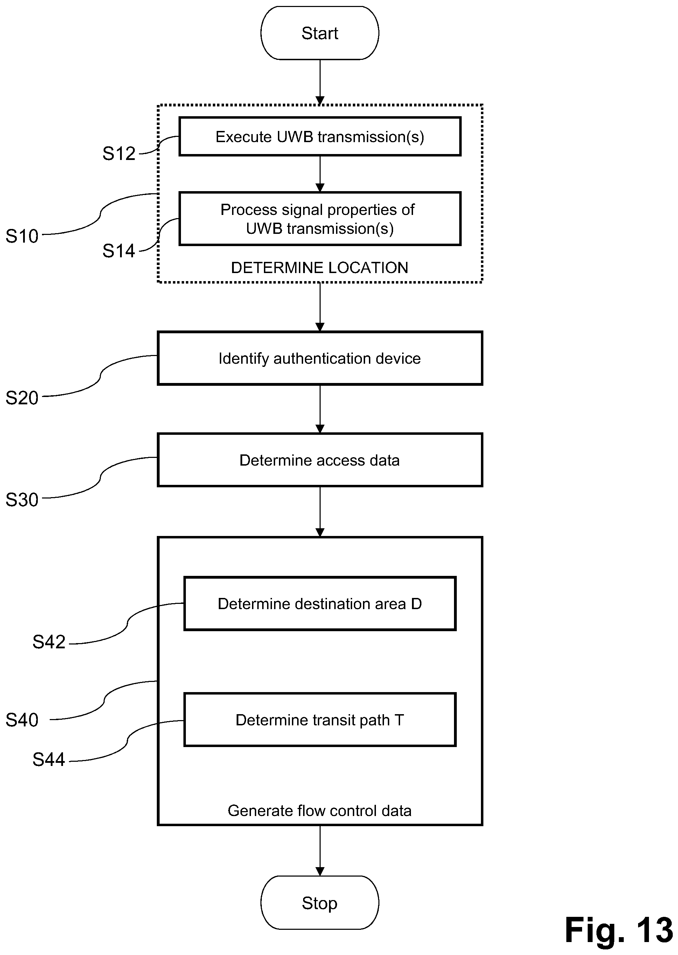

- Figure 13:: shows a further embodiment of a method for controlling people flow within a control area according to the present invention, wherein generation of flow control data comprises generating a transit path;

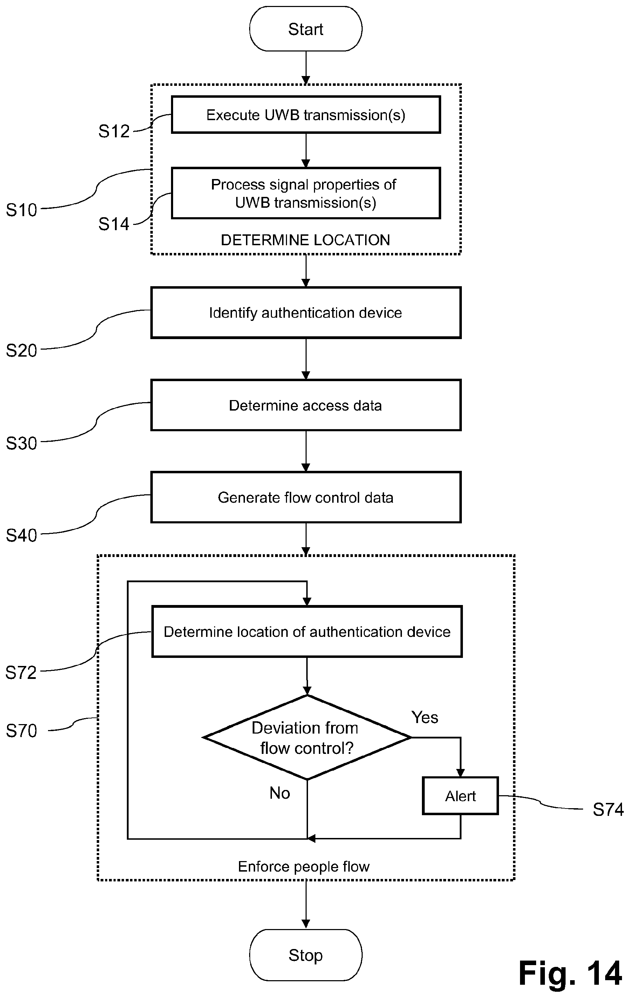

- Figure 14:: shows a further embodiment of a method for controlling people flow within a control area according to the present invention, further comprising enforcement of people flow; and

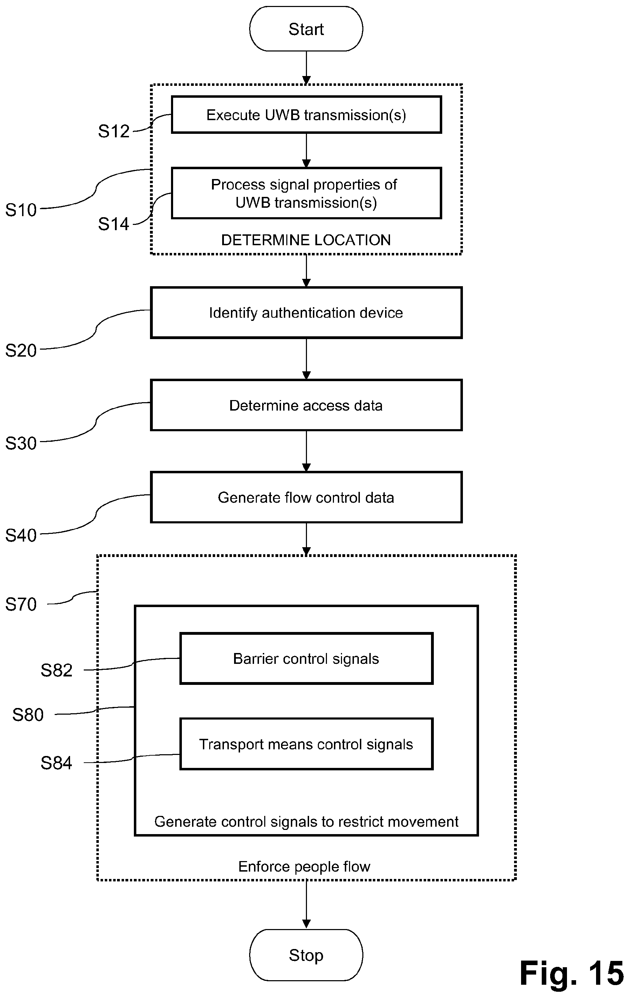

- Figure 15:: shows a further embodiment of a method for controlling people flow within a control area according to the present invention, further comprising generation of control signals to restrict movement within the control area.

### Detailed Description of embodiments

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

**Figure 1A** shows a highly schematic perspective view of a people flow control system 1 associated with a control area A, the control area A comprising a floor of a building including an entrance area comprising a plurality of barriers 5 arranged such as to be able to restrict or even prevent passage of persons therethrough. A plurality of UWB detection devices 10 are arranged within and associated with the control area A at locations such as to enable detection of the location of authentication device 100 relative to one or more checkpoint(s) C1-n, C1.1-Cm.n within the control area A. The checkpoints c1-n, C1.1-Cm.n are defined within a control area A such as to cover at least a portion thereof. In the embodiment shown on **Figure 1B****,** the checkpoints C1.1.-m.n are arranged in a grid covering at least a portion of the control area A. It shall be noted that the checkpoints C1.1-Cm.n must not be co-located with the UWB detection device(s) 10. However, the placement of the UWB detection device(s) 10 is such so as to enable the plurality of UWB detection device(s) 10 to determine the location of authentication devices 100 relative to one or more checkpoints, preferably all checkpoints C1.1-Cm.n.

As shown on **Figure 1C****,** alternatively or additionally, the checkpoints C1-n are arranged according to areas of interest across the control area A.

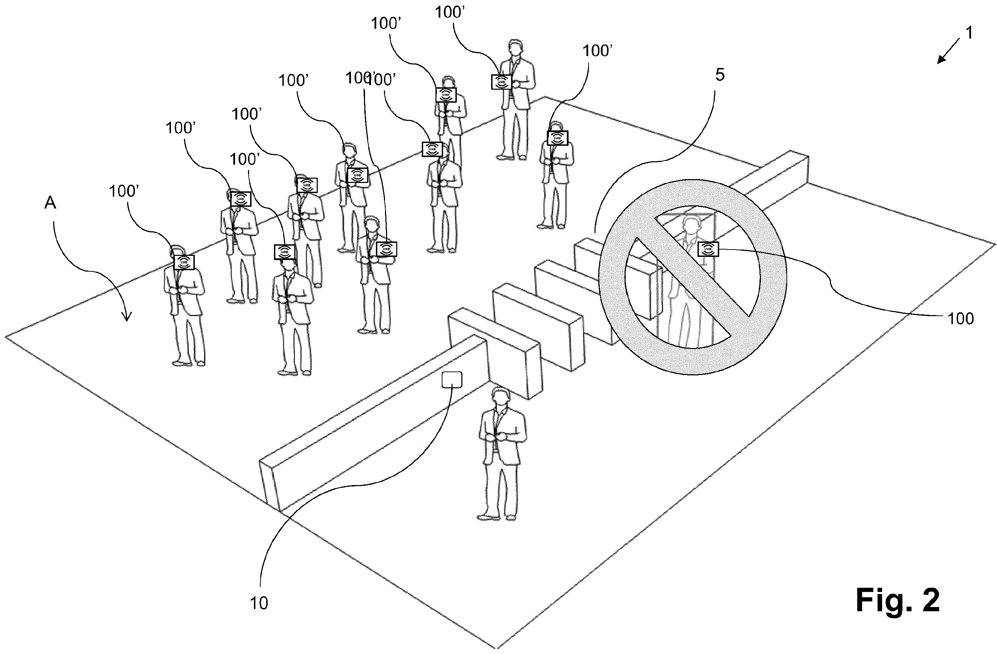

**Figure 2** shows a highly schematic perspective view of a further embodiment of a people flow control system 1 according to the present invention, illustrating denial of entry for the holder of an authentication device 100 based on a number of authentication devices 100' already present within the control area A exceeding a threshold occupancy. The denial of entry (generation of corresponding access control data) is enforced by means of a plurality of barriers 5 arranged at an entry/exit area of the control area A.

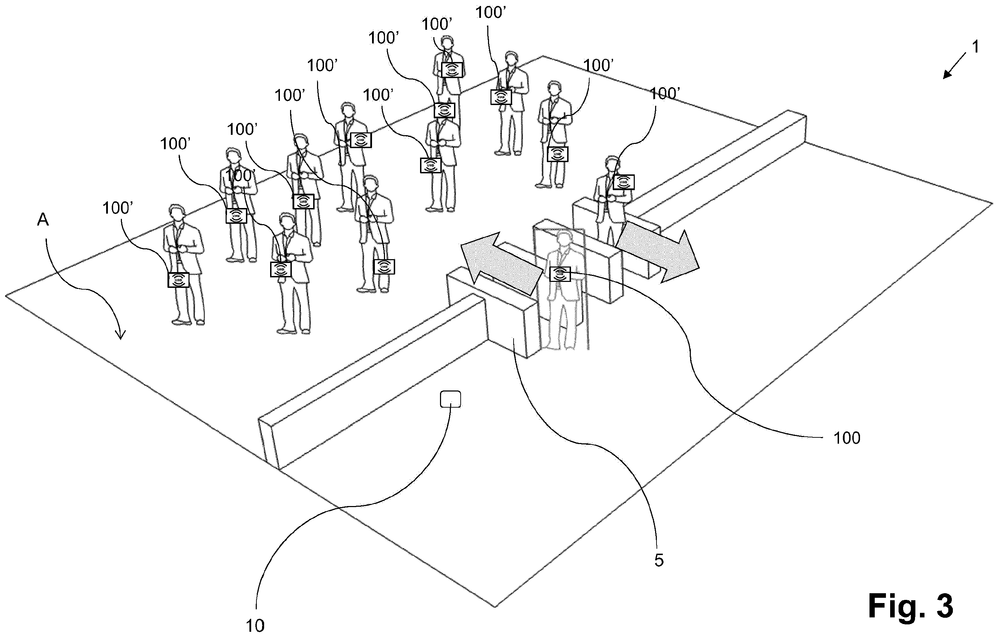

**Figure 3** shows a highly schematic perspective view of a further embodiment of a people flow control system 1 according to the present invention, illustrating updating of a presence list of authentication device(s) 100' already present within the control area A upon entry and/or exit of authentication device(s) 100, 100' into/ out of the control area A.

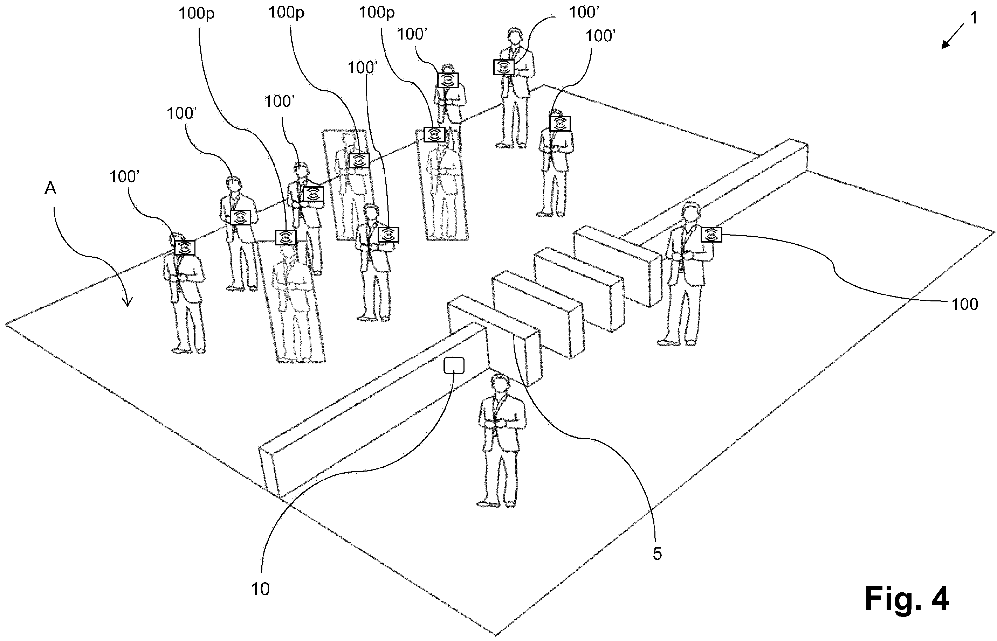

**Figure 4** shows a highly schematic perspective view of a further embodiment of a people flow control system 1 according to the present invention, illustrating generation of people flow control data in accordance with attributes associated with authentication devices 100, 100'. The one or more attribute(s) associated with the authentication device 100 are determined upon detection and identification of authentication devices 100, 100' by any one of the plurality of UWB detection devices 10. Correspondingly, the presence list (of authentication devices 100 already present in the control area A) is categorized in accordance with the one or more attributes. Furthermore, the presence list is updated upon detection of entry or exit into respectively out of the control area or particular section(s) thereof in accordance with the attributes of the authentication device(s) entering or exiting.

Depending on the particular use case, the attributes associated with authentication devices 100, 100' comprise indications whether the user of the authentication device is vaccinated or not, is a registered personnel of the control area A or a visitor, is a maintenance staff or administrator of the control area A, respectively of the people flow control system 1. Having determined the one or more attribute(s) associated with the authentication device 100 upon detection and identification, the flow control data is generated in accordance with the categorized presence list and in accordance with the one or more attribute(s) of the authentication device 100. As illustrated on Figure 4 with a grey rectangle around occupant's silhouettes, authentication devices of personnel or administrators 100p of a control area A are provided different indication(s) than visitors' 100.

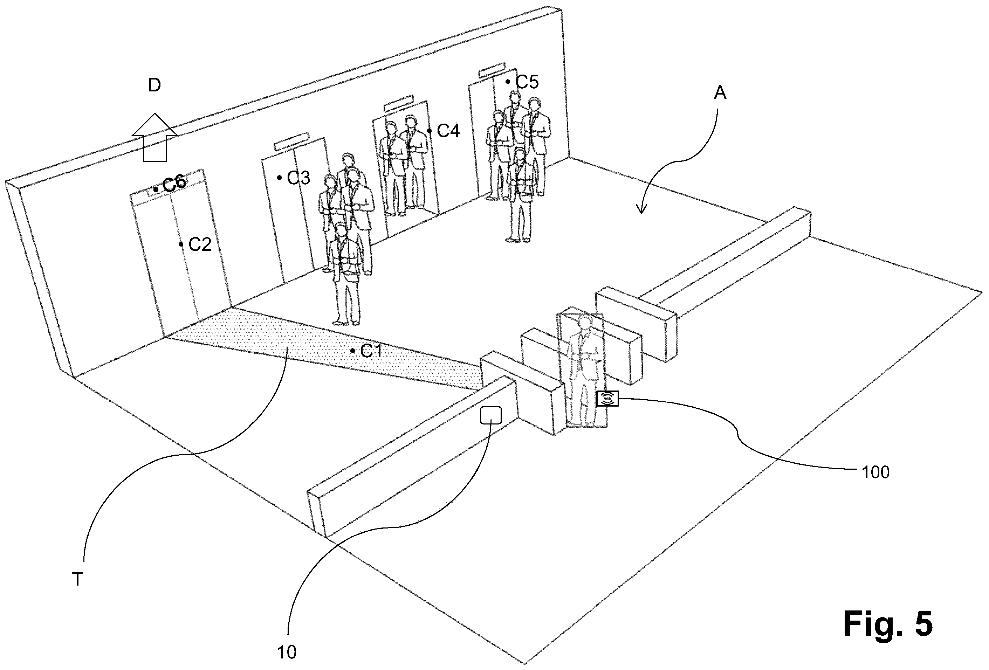

**Figure 5** shows a highly schematic perspective view of a further embodiment of a people flow control system 1 according to the present invention, illustrating generation of a transit path T (as part of people flow control data) from the location of the authentication device 100 to a destination area D. In the illustrated scenario, the destination area D is located on a floor of the building (checkpoint C6) where the first elevator (from the left) will make a stop. The transit path T comprises data identifying several more checkpoint(s) C1, C2 (the elevator) and C6 (the building floor of the destination area D), linking the location of the authentication device 100 to the destination area D. As illustrated, the transit path T has been determined based on occupancy level the plurality of elevators (transport means) within the control area A, the second, third and fourth elevators (from the left) being highly occupied.

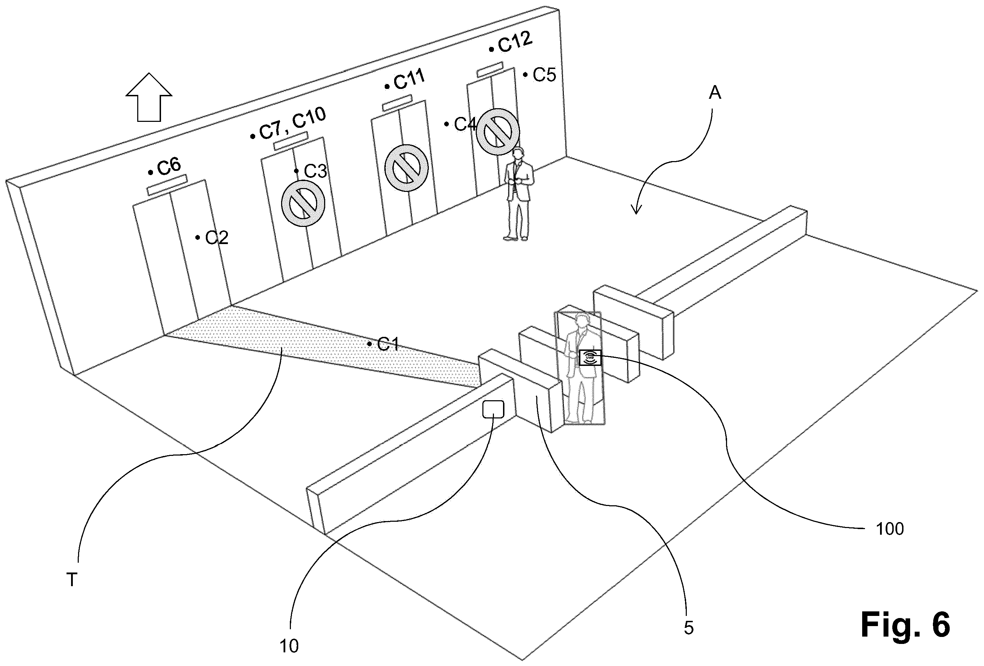

**Figure 6** shows a highly schematic perspective view of a further embodiment of a people flow control system 1 according to the present invention, illustrating a use case similar to that of Figure 5, however in this use case, the transit path T from the location of the authentication device 100 to the destination area D is determined based access restrictions associated with the authentication device 100, namely denial to access any one of the building floors (respectively areas located on respective floors defined by checkpoints C7, C10, C11 and C12) where the second, third and fourth elevators (from the left) will make a stop.

Side note: the checkpoint labels shown on figures 5 and 6 above elevator doors illustrate the checkpoints associated with building floors where the respective elevator makes a stop.

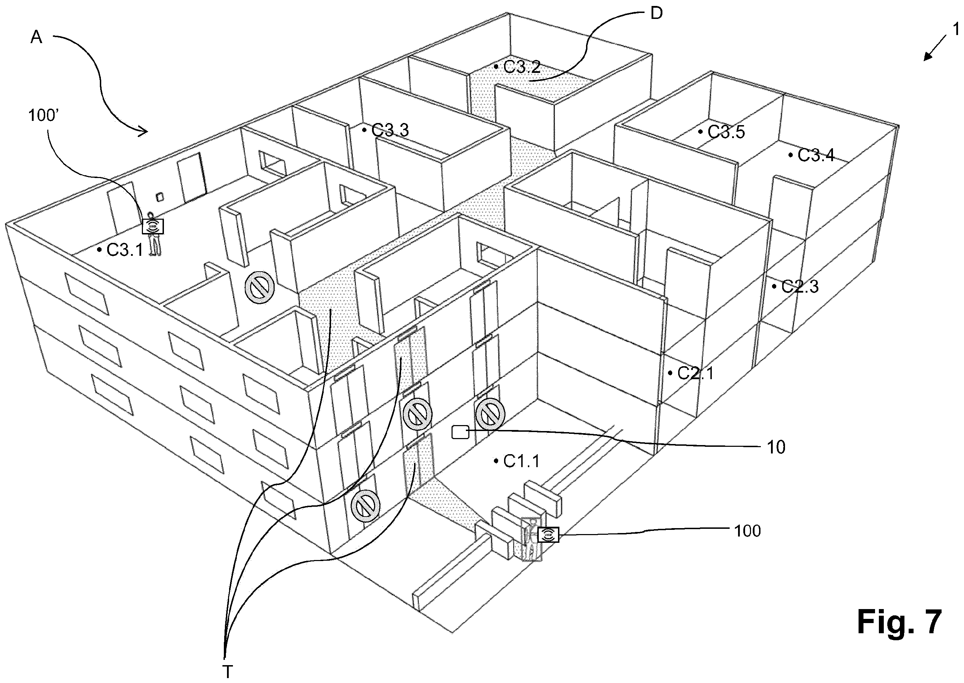

**Figure 7** shows a highly schematic perspective view of a use case of a people flow control system 1 according to the present invention, illustrating generation of a transit path T (as part of people flow control data) from the location of the authentication device 100 to a destination area D in a multi-story building. The transit path T comprises both a pathway (defined as a series of checkpoint C1.1-Cm.n) as well as indication of an elevator (by its associated checkpoint) supplied with control signals to enforce the people flow by controlling a destination of the elevator according to the transit path T. As illustrated, the transit path excludes the office on the third floor to which checkpoint C3.1 is associated with, in view of an access restriction comprising an indication of restricted user interaction(s), in particular forbidding the presence of the authentication device 100 within the same section(s) of the control area A as further authentication device 100'

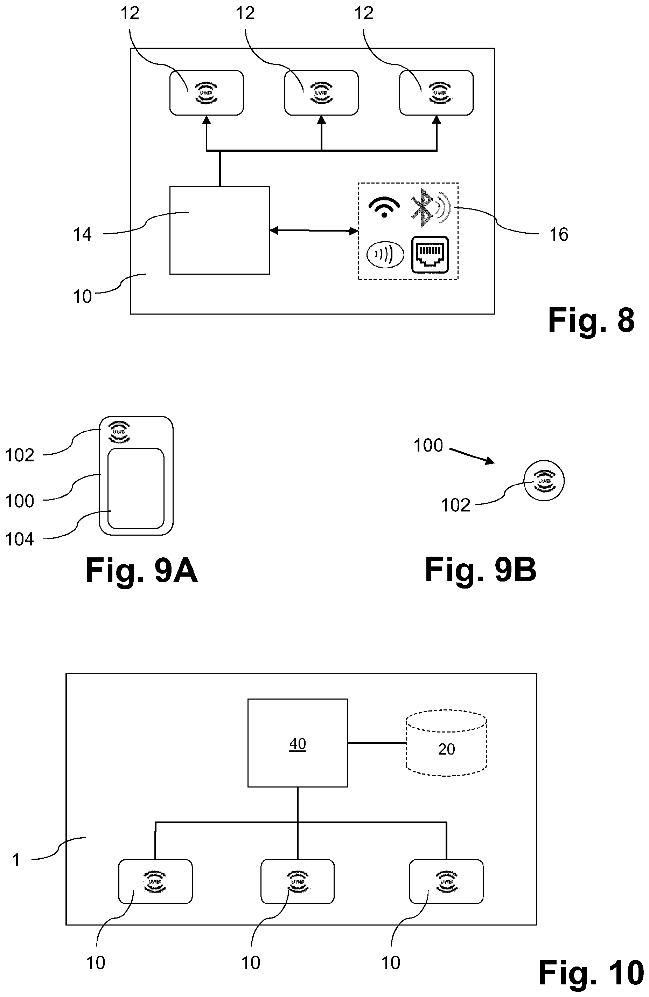

**Figure 8** shows a highly schematic block diagram of a UWB detection device 10 according to the present invention. As shown, the UWB detection device 10 comprises a processing unit 14 and one or more ultra-wideband transceiver(s) 12. The one or more ultra-wideband transceiver(s) 12 are configured to executed ultra-wideband transmissions with authentication devices 100 in order to determine their location by processing signal properties of the ultra-wideband UWB transmissions such as propagation time, amplitude difference and/or phase difference of the ultra-wideband transmissions.

The UWB detection device 10, in particular its processing unit 14 is configured for carrying out the method for controlling people flow within a control area A according to one of the embodiments disclosed herein.

According to further embodiments of the present disclosure (shown with dashed lines on Figure 5), the UWB detection device 10 further comprises a communication module 16 for establishing data communication link(s) with other UWB detection device 10 and/or the barrier(s) 5 and/or with a processing unit 14 of the people flow control system 1 external to any one of the UWB detection devices 10. According to embodiments of the present disclosure, the communication module16 comprises wireless communication interface(s) (such as Bluetooth Low Energy BLE, a Wireless Local Area Network WLAN, ZigBee, Radio Frequency Identification RFID, Z-Wave, and/or Near Field Communication NFC interface(s)) and/or wired communication interface(s) (such as an Ethernet interface).

**Figure 9A** shows a highly schematic block diagram of a first embodiment of an authentication device 100 according to the present invention comprised by a smartphone, the authentication device 100 comprising a display screen 104 for displaying (among other information) the visual representations of the flow control data. Furthermore, the authentication devices 100 comprise an ultra-wideband communication module 102. The ultra-wideband communication module 102 is configured for establishing an ultra-wideband transmission with the respective ultra-wideband transceiver(s) 12 of the UWB detection device(s) 10 of the security control system 1.

**Figure 9B** shows a highly schematic block diagram of a further embodiment of an authentication device according to the present invention comprised by a tag (such as a key tag or badge).

**Figure 10** shows a highly schematic block diagram of an embodiment of a people flow control system 1 according to the present invention, wherein the plurality of UWB detection devices 10 are communicatively connected to a processing unit 40 and optionally to a data store 20.

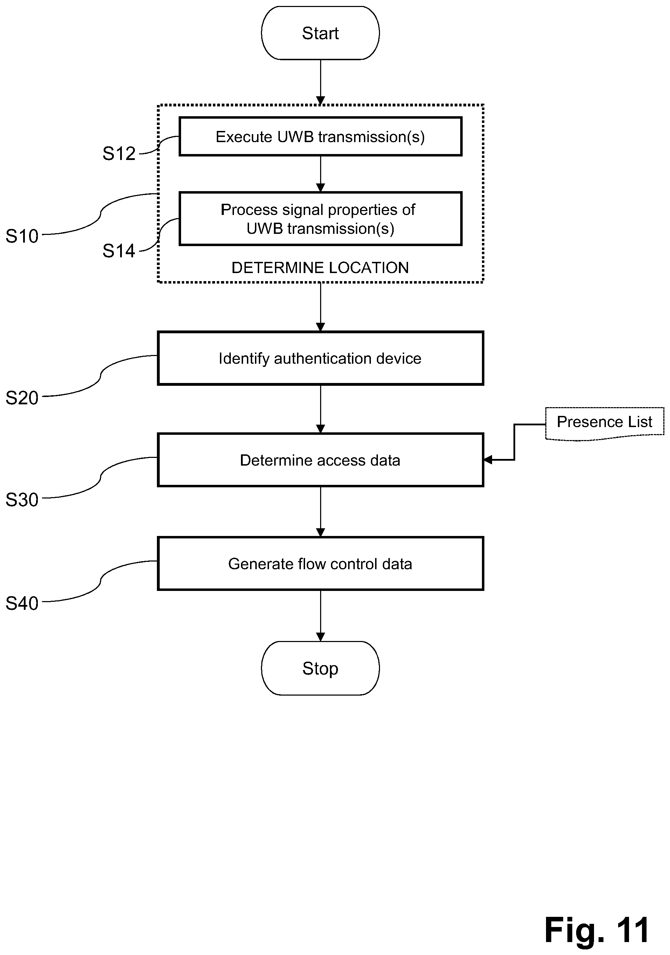

Turning now to figures 11 to 15, the method for controlling people flow within a control area according to various embodiments of the present invention shall be described with reference to corresponding flowcharts.

As a preparatory step, checkpoint(s) C1-n, 1.1-n.m are defined within the control area A. Details on how the checkpoints are defined have been described in preceding paragraphs related to Figures 1B and 1C.

**Figure 11** shows a flowchart of a first embodiment of a method for controlling people flow within a control area A. In a first step S10, the location of the authentication device 100 relative to one or more checkpoint(s) C1-n, C1.1-Cm.n within the control area A is determined. As part of the first step S10, in a substep S12, ultra-wideband transmissions are executed with an authentication device 100 using one or more ultra-wideband transceiver(s) 12 of the UWB detection device(s) 10. Thereafter, as part of substep S14, signal properties of the one or more ultra-wideband transmissions are processed to enable determination of the location of the authentication device(s) 100.

In a step S20, subsequent, preceding or simultaneous to step S10, the authentication device 100 is identified, in particular by exchanging authentication data using the ultra-wideband transmissions between the UWB detection device(s) and the authentication device 100.

Having determined the location of the authentication device 100 relative to one or more checkpoint(s) C1-n, C1.1-Cm.n and having identified the authentication device 100, in a subsequent step S30, access rights data associated with the authentication device 100 is determined.

Thereafter, having determined the location of the authentication device and the associated access rights data, in step S40, flow control data is generated based on the access rights data and based on the location of the authentication device 100. The flow control data comprises indication(s) of locations, directions and/or particular sections within the control area A where a user associated with the authentication device 100 is permitted, recommended and/or denied access, presence and/or passage. For example, the indication(s) of the flow control data are generated as a sorted list of a sequence of locations, directions and/or particular sections within the control area A.

According to embodiments, as illustrated with dashed lines on Figure 11, the flow control data is generated in accordance with a presence list of authentication device(s) 100' already present within the control area A and/or within particular section(s) of the control area A. The presence list is retrieved from a data store internal to or communicatively accessible by one or more of the UWB detection device(s) 10 or the flow control system 1.

As shown on **Figure 12****,** according to an embodiment, a human-interpretable representation of at least a part of the flow control data is generated in step S50. The human-interpretable representation comprises one or more of: a visual, audible and/or haptic representation of indication(s) of locations, directions and/or particular sections within the control area A where a user associated with the authentication device 100 is permitted, recommended and/or denied access, presence and/or passage. After being generated, in a subsequent step S60, the human-interpretable representation of at least a part of the flow control data is output to the user of the authentication device 100. For example, the human-interpretable representation in the form of a visual indication is output on a display of an entry/ exit barrier arranged within the control area, such as displaying a number indicating an elevator to take or an identification of an assigned meeting room.

Illustrated on Figure 12 with dashed lines, according to embodiments, in a step S54 at least a part the flow control data and/or the human-interpretable representation thereof is transmitted to the authentication device 100 to be output by the authentication device 100, for example on a display, speaker or haptic device comprised by or connected to the authentication device.

As illustrated on **Figure 13****,** according to a further embodiment of a method for controlling people flow within a control area A, in a step 40, a transit path T is generated. In a first substep S42, a destination area D associated with the authentication device 100 is determined upon its identification. The destination area D may be determined by a query to a data store 20 (comprised by and/or communicatively connected to one or more of the UWB detection device(s) 10 and/or the people flow control system 1, the data store 20 comprising data identifying a destination area A associated with the authentication device 100, such as its owner's office, an allocated meeting room based on a calendar/ schedule associated with the owner of the authentication device. Alternatively, or additionally, data indicative the destination area D is transmitted by the authentication device 100, in particular using the ultra-wideband transmission(s) executed with one or more of the UWB detection device(s) 10. Thereafter, in substep S44, a transit path T is determined by the processing unit 14 or 40, comprising data indicative of checkpoints C1-n, 1.1-n.m that link the location of the authentication device 100 - as determined in step S10 - to its destination area D.

**Figure 14****:** shows a further embodiment of a method for controlling people flow within a control area A according to the present invention, further comprising enforcement of people flow in step S70. As part of step S70, in a substep S72 the location of the authentication device 100 relative to one or more checkpoint(s) C1-n, C1.1-Cm.n within the control area A is repeatedly determined by processing signal properties of the one or more ultra-wideband transmissions. Thereafter, the location of the authentication device 100 is compared with the flow control data. According to step S74 an alert signal is generated, the alert signal being indicative of a deviation of the location of the authentication device 100 from the flow control data.

As shown on **Figure 15****,** in order to provide an even stricter enforcement of the people flow, in a step S80 control signals are generated to restrict movement of the user of the authentication device 100 between sections of the control area A according to the flow control data. According to a step S82, control signals are generated for the control of one or more barriers 5 arranged within the control area A, each barrier 5 being configured to be able to physically restrict or even prevent passage of a user (and hence the authentication device carried by the user) from one section of the control area to another (as defined by respective checkpoints C1-n, 1.1-n.m).

Alternatively, or additionally, in order to enforce a transit path T (of the flow control data), according to step S84, control signals are generated for the control of transport means within the control area A. For example, control signals are generated which determine the destination floor of elevator(s).

### List of reference numerals

| | |
|---|---|
| people flow control system | 1 |
| barrier | 5 |
| UWB detection device | 10 |
| ultra-wideband transceiver | 12 |
| processing unit (of UWB detection device) | 14 |
| processing unit (of people flow control system) | 40 |
| communication module | 16 |
| data store | 20 |
| authentication device | 100, 100' |
| ultra-wideband communication module (of the authentication device) | 102 |
| display (of authentication device) | 104 |
| control area | A |
| transit path | T |
| destination area | D |
| checkpoint | C1-n, C1.1-Cm.n |

## Claims

1. A method for controlling people flow within a control area (A) using one or more UWB detection device(s) (10) associated with the control area (A), comprising the steps of:
- executing ultra-wideband transmissions with an authentication device (100) using one or more ultra-wideband transceiver(s) (12) of the UWB detection device(s) (10);
- determining, by the UWB detection device(s) (10), a location of the authentication device (100) relative to one or more checkpoint(s) (C1-n, C1.1-Cm.n) within the control area (A) by processing signal properties of the one or more ultra-wideband transmissions;
- identifying the authentication device (100);
- determining access rights data associated with the authentication device (100);
- generating flow control data based on the access rights data and based on the location of the authentication device (100) in accordance with a presence list of authentication device(s) (100') already present within the control area (A) and/or within particular section(s) of the control area (A).

2. The method according to claim 1, further comprising:
- generating an at least partially human-interpretable representation of at least a part of the flow control data; and
- outputting the at least partially human-interpretable representation to the user of the authentication device (100).

3. The method according to claim 1 or 2, further comprising transmitting at least a part the flow control data to the authentication device (100) to be output by the authentication device (100).

4. The method according to any one of claims 1 to 3, further comprising updating the presence list based on detecting, using one or more of the UWB detection device(s) (10), entry and/or exit of authentication device(s) (100, 100') into/ out of the control area (A) and/or particular section(s) of the control area (A).

5. The method according to any one of claims 1 to 4, further comprising:
- determining one or more attribute(s) associated with the authentication device (100);
- categorizing the presence list in accordance with the one or more attribute(s); and
- generating flow control data in accordance with the presence list and in accordance with the one or more attribute(s) of the authentication device (100).

6. The method according to one of the claims 1 to 5, further comprising:
- determining a destination area (D) associated with the authentication device (100);
- determining a transit path (T) from the location of the authentication device (100) to the destination area (D);
wherein flow control data comprises data indicative of the transit path (T).

7. The method according to claim 6, further comprising:
- retrieving occupancy data within the control area (A); and
- optimizing the transit path (T) based on the occupancy data and the destination area (D).

8. The method according to claim 7, wherein:
- the occupancy data comprises an indication of the occupancy level of one or more of a plurality of transport means within the control area (A),
- optimizing the transit path (T) based on the occupancy data and the destination area (D) comprises determining a target transport means; and
- the flow control data comprises an indication of the target transport means plurality of transport means.

9. The method according to one of the claims 6 to 8, further comprising determining access restriction(s) associated with the UWB detection device (100), wherein the transit path (T) is generated such as not to violate the access restriction(s).

10. The method according to claim 9, wherein the access restriction(s) comprises:
- an indication of restricted section(s) of the control area (A), wherein the transit path (T) is determined such as to avoid restricted section(s); and/or
- an indication of restricted user interaction(s), wherein the transit path (T) is determined such as not to intersect the transit path(s) (T) associated with any of the authentication device(s) (100') identified by the restricted user interaction(s) and/or such that the transit path (T) does not comprise section(s) of the control area (A) where any of the authentication device(s) (100') identified by the restricted user interaction(s) is/are located.

11. The method according to one of the claims 1 to 10, further comprising:
- repeatedly determining, by the UWB detection device(s) (10), the location of the authentication device (100) relative to one or more checkpoint(s) (C1-n, C1.1-Cm.n) within the control area (A) by processing signal properties of the one or more ultra-wideband transmissions; and
- enforcing people flow within the control area (A).

12. The method according to claim 11, wherein enforcing people flow within the control area (A) comprises comparing the location of the authentication device (100) with the flow control data and generating an alert signal indicative of a deviation of the location of the authentication device (100) from the flow control data.

13. The method according to claim 11 or 12, wherein enforcing people flow within the control area (A) comprises generating control signals to restrict movement of a user of the authentication device (100) between sections of the control area (A) according to the flow control data, comprising:
- control signals for the control of one or more barriers arranged within the control area (A); and/or
- control signals for the control of transport means within the control area (A).

14. An UWB detection device (10), comprising a processing unit (14) and one or more ultra-wideband transceiver(s) (12), the UWB detection device being configured for carrying out the method according to one of the claims 1 to 13.

15. A people flow control system (1) for controlling people flow within a control area (A), comprising a processing unit (14) and one or more UWB detection device(s) (10), each UWB detection device (10) comprising one or more ultra-wideband transceiver(s) (12), the people flow control system (1) being configured for carrying out the method according to one of the claims 1 to 13.

16. A computer program product comprising computer-executable instructions which, when executed by a processing unit (14) of a people flow control system (1) comprising one or more UWB detection device(s) (10), each UWB detection device (10) comprising one or more ultra-wideband transceiver(s) (12), causes the people flow control system (1) to carry out the method according to one of the claims 1 to 13.

## Patentansprüche

1. Verfahren zur Steuerung des Personenflusses innerhalb eines Kontrollbereichs (A) unter Verwendung einer oder mehrerer UWB-Erkennungsvorrichtung(en) (10), die dem Kontrollbereich (A) zugeordnet sind, umfassend die folgenden Schritte:
- Ausführen von Ultrabreitbandübertragungen mit einer Authentifizierungsvorrichtung (100) unter Verwendung einer oder mehrerer Ultrabreitband-Transceiver(n) (12) der UWB-Erkennungsvorrichtung(en) (10);
- Bestimmen , mittels der UWB-Erkennungsvorrichtung(en) (10), eines Standorts der Authentifizierungsvorrichtung (100) relativ zu einem oder mehreren Kontrollpunkt(en) (C1-n, C1.1-Cm.n) innerhalb des Kontrollbereichs (A) mittels Verarbeiten von Signaleigenschaften der einen oder mehreren Ultrabreitbandübertragungen;
- Identifizieren der Authentifizierungsvorrichtung (100);
- Bestimmen von Zugriffsrechtsdaten, die der Authentifizierungsvorrichtung (100) zugeordnet sind;
- Erzeugen von Flusssteuerungsdaten basierend auf den Zugriffsrechtsdaten und basierend auf dem Standort der Authentifizierungsvorrichtung (100) gemäss einer Anwesenheitsliste von Authentifizierungsvorrichtung(en) (100'), die bereits innerhalb des Kontrollbereichs (A) und/oder innerhalb bestimmten Abschnitt(en) des Kontrollbereichs (A) vorhanden sind.

2. Das Verfahren gemäss Anspruch 1 ferner umfassend:
- Erzeugen einer zumindest teilweise für Menschen interpretierbaren Darstellung von zumindest einem Teil der Flusssteuerungsdaten; und
- Ausgeben der zumindest teilweise für Menschen interpretierbaren Darstellung an den Benutzer der Authentifizierungsvorrichtung (100).

3. Das Verfahren gemäss Anspruch 1 oder 2 ferner umfassend Übertragen mindestens eines Teils der Flusssteuerungsdaten an die Authentifizierungsvorrichtung (100), um von der Authentifizierungsvorrichtung (100) ausgegeben zu werden.

4. Verfahren gemäss einem der Ansprüche 1 bis 3 ferner umfassend das Aktualisieren der Anwesenheitsliste basierend auf dem Erfassens des Betretens und/oder Verlassens des/der Authentifizierungsvorrichtung(en) (100, 100') in den/aus dem Kontrollbereich (A) und/oder bestimmten Abschnitt(en) des Kontrollbereichs (A), unter Verwendung einer oder mehrerer der UWB-Erkennungsvorrichtungen (10).

5. Das Verfahren gemäss einem der Ansprüche 1 bis 4 ferner umfassend:
- Bestimmen einer oder mehrerer Eigenschaft(en), die der Authentifizierungsvorrichtung (100) zugeordnet sind;
- Kategorisieren der Anwesenheitsliste gemäss der einen oder den mehreren Eigenschaft(en); und
- Erzeugen von Flusssteuerungsdaten gemäss der Anwesenheitsliste und gemäss der einen oder den mehreren Eigenschaft(en) der Authentifizierungsvorrichtung (100).

6. Das Verfahren gemäss einem der Ansprüche 1 bis 5 ferner umfassend:
- Bestimmen eines Zielbereichs (D), der der Authentifizierungsvorrichtung (100) zugeordnet ist;
- Bestimmen eines Transitpfads (T) vom Standort der Authentifizierungsvorrichtung (100) zum Zielbereich (D);
wobei die Flusssteuerungsdaten Daten umfassen, die dem Transitpfad (T) zugeordnet sind.

7. Verfahren gemäss Anspruch 6 ferner umfassend:
- Abrufen von Belegungsdaten innerhalb des Kontrollbereichs (A); und
- Optimieren des Transitpfads (T) basierend auf den Belegungsdaten und dem Zielbereich (D).

8. Das Verfahren gemäss Anspruch 7, wobei:
- die Belegungsdaten eine Angabe des Belegungsgrades eines oder mehrerer einer Vielzahl von Transportmitteln innerhalb des Kontrollbereichs (A) umfassen,
- die Optimierung des Transitpfads (T) basierend auf den Belegungsdaten und dem Zielbereich (D) die Bestimmung eines Zieltransportmittels umfasst; und
- die Flusssteuerungsdaten eine Angabe des Zieltransportmittels zu einer Vielzahl von Transportmitteln umfassen.

9. Verfahren gemäss einem der Ansprüche 6 bis 8 ferner umfassend Bestimmen von Zugangsbeschränkung(en), die der UWB-Erkennungsvorrichtung (100) zugeordnet sind, wobei der Transitpfad (T) so erzeugt wird, dass er die Zugangsbeschränkung(en) nicht verletzt.

10. Das Verfahren gemäss Anspruch 9, wobei die Zugangsbeschränkung(en) Folgendes umfasst:
- eine Angabe von beschränkten Abschnitt(en) des Kontrollbereichs (A), wobei der Transitpfad (T) so bestimmt wird, dass beschränkte Abschnitt(e) vermieden werden; und/oder
- eine Angabe von beschränkten Benutzerinteraktion(en), wobei der Transitpfad (T) so bestimmt wird, dass er den Transitpfad(en) (T) nicht überschneidet, der mit einer der beschränkte(n) Benutzerinteraktion(en) der Authentifizierungsvorrichtung(en) (100') zugeordnet ist, die mittels der beschränkten(n) Benutzerinteraktion(en) identifiziert wurde(n) und/oder so bestimmt wird, dass der Transitpfad (T) keine Abschnitt(e) des Kontrollbereichs (A) umfasst, in denen sich eine der Authentifizierungsvorrichtung(en) (100') befindet, die mittels der beschränkte(n) Benutzerinteraktion(en) identifiziert wurde(n).

11. Verfahren gemäss einem der Ansprüche 1 bis 10, das ferner umfassend:
- wiederholtes Bestimmen, mittels der UWB-Erkennungsvorrichtung(en) (10), des Standorts der Authentifizierungsvorrichtung (100) relativ zu einem oder mehreren Kontrollpunkt(en) (C1-n, C1.1-Cm.n) innerhalb des Kontrollbereichs (A) mittels Verarbeiten von Signaleigenschaften der einen oder mehreren Ultrabreitbandübertragungen; und
- Durchsetzen des Personenflusses innerhalb des Kontrollbereichs (A).

12. Verfahren gemäß Anspruch 11, wobei das Durchsetzen des Personenflusses innerhalb des Kontrollbereichs (A) das Vergleichen des Standorts der Authentifizierungsvorrichtung (100) mit den Flusssteuerungsdaten und das Erzeugen eines Alarmsignals umfasst, das einer Abweichung des Standorts der Authentifizierungsvorrichtung (100) von den Flusssteuerungsdaten zugeordnet ist.

13. Verfahren gemäss Anspruch 11 oder 12, wobei das Durchsetzen des Personenflusses innerhalb des Kontrollbereichs (A) das Erzeugen von Steuerungssignalen umfasst, um die Bewegung eines Benutzers der Authentifizierungsvorrichtung (100) zwischen Abschnitten des Kontrollbereichs (A) gemäss den Flusssteuerungsdaten zu beschränken, umfassend:
- Steuerungssignale zur Steuerung einer oder mehrerer Barrieren, die innerhalb des Kontrollbereichs (A) angeordnet sind; und/oder
- Steuerungssignale zur Steuerung von Transportmitteln innerhalb des Kontrollbereichs (A).

14. Eine UWB-Erkennungsvorrichtung (10), die eine Verarbeitungseinheit (14) und einen oder mehrere Ultrabreitband-Transceiver(n) (12) umfasst, wobei die UWB-Erkennungsvorrichtung eingerichtet ist, das Verfahren gemäss einem der Ansprüche 1 bis 13 durchzuführen.

15. Ein Personenflusssteuerungssystem (1) zur Steuerung des Personenflusses innerhalb eines Kontrollbereichs (A), umfassend eine Verarbeitungseinheit (14) und eine oder mehrere UWB-Erkennungsvorrichtung(en) (10), wobei jede UWB-Erkennungsvorrichtung (10) einen oder mehrere Ultrabreitband-Transceiver(n) (12) umfasst, wobei das Personenflusssteuerungssystem (1) eingerichtet ist, das Verfahren gemäss einem der Ansprüche 1 bis 13 auszuführen.

16. Ein Computerprogrammprodukt, das computerausführbare Befehle umfasst, die, wenn sie von einer Verarbeitungseinheit (14) eines Personenflusssteuerungssystems (1) ausgeführt werden, das eine oder mehrere UWB-Erkennungsvorrichtung(en) (10) umfasst, wobei jede UWB-Erkennungsvorrichtung (10) einen oder mehrere Ultrabreitband-Transceiver(n) (12) umfasst, das Personenflusssteuerungssystem (1) veranlasst, das Verfahren gemäss einem der Ansprüche 1 bis 13 auszuführen.

## Revendications

1. Procédé pour contrôler le flux de personnes dans une zone de contrôle (A) à l'aide d'un ou plusieurs dispositifs de détection UWB (10) associés à la zone de contrôle (A), comprenant les étapes suivantes:
- exécuter des transmissions à bande ultra large avec un dispositif d'authentification (100) utilisant un ou plusieurs transcepteurs à bande ultra large (12) du ou des dispositifs de détection UWB (10);
- déterminer, à l'aide du ou des dispositifs de détection UWB (10), l'emplacement du dispositif d'authentification (100) par rapport à un ou plusieurs points de contrôle (C1-n, C1 .1-Cm.n) dans la zone de contrôle (A) en traitant les propriétés du signal d'une ou plusieurs transmissions à bande ultra large;
- identifier le dispositif d'authentification (100);
- déterminer les données relatives aux droits d'accès associées au dispositif d'authentification (100);
- générer des données de contrôle de flux sur embase des données relatives aux droits d'accès et sur embase de l'emplacement du dispositif d'authentification (100) conformément à une liste de présence des dispositifs d'authentification (100') déjà présents dans la zone de contrôle (A) et/ou dans une ou plusieurs sections particulières de la zone de contrôle (A).

2. Procédé selon la revendication 1, comprenant en outre:
- générer une représentation au moins partiellement interprétable par l'homme d'au moins une partie des données de contrôle de flux ; et
- transmettre la représentation au moins partiellement interprétable par l'homme à l'utilisateur du dispositif d'authentification (100).

3. Procédé selon la revendication 1 ou 2, comprenant en outre transmettre au moins une partie des données de contrôle de flux au dispositif d'authentification (100) afin qu'elles soient transmises par le dispositif d'authentification (100).

4. Procédé selon l'une quelconque des revendications 1 à 3, comprenant en outre la mise à jour de la liste de présence sur embase de la détection, à l'aide d'un ou plusieurs dispositifs de détection UWB (10), de l'entrée et/ou de la sortie de dispositifs d'authentification (100, 100') dans/hors de la zone de contrôle (A) et/ou de sections particulières de la zone de contrôle (A).

5. Procédé selon l'une quelconque des revendications 1 à 4, comprenant en outre:
- déterminer un ou plusieurs attributs associés au dispositif d'authentification (100);
- catégoriser la liste de présence en fonction du ou des attributs ; et
- générer des données de contrôle de flux conformément à la liste de présence et conformément au ou aux attributs du dispositif d'authentification (100).

6. Procédé selon l'une des revendications 1 à 5, comprenant en outre:
- déterminer une zone de destination (D) associée au dispositif d'authentification (100);
- déterminer un chemin de transit (T) entre l'emplacement du dispositif d'authentification (100) et la zone de destination (D);
dans laquelle les données de contrôle de flux comprennent des données indiquant le chemin de transit (T).

7. Procédé selon la revendication 6, comprenant en outre:
- récupérer des données d'occupation dans la zone de contrôle (A) ; et
- optimiser le chemin de transit (T) sur embase des données d'occupation et de la zone de destination (D).

8. Procédé selon la revendication 7, dans lequel:
- les données d'occupation comprennent une indication du niveau d'occupation d'un ou plusieurs moyens de transport parmi une pluralité d' moyens de transport dans la zone de contrôle (A),
- l'optimisation du chemin de transit (T) sur embase des données d'occupation et de la zone de destination (D) comprend déterminer un moyen de transport cible ; et
- les données de contrôle de flux comprennent une indication du moyen de transport cible parmi la pluralité d' moyens de transport.

9. Procédé selon l'une des revendications 6 à 8, comprenant en outre la détermination d'une ou plusieurs restrictions d'accès associées au dispositif de détection UWB (100), dans laquelle le chemin de transit (T) est généré de manière à ne pas enfreindre la ou les restrictions d'accès.

10. Procédé selon la revendication 9, dans laquelle la ou les restrictions d'accès comprennent:
- une indication de la ou des sections restreintes de la zone de contrôle (A), dans laquelle le chemin de transit (T) est déterminé de manière à éviter la ou les sections restreintes ; et/ou
- une indication de la ou des interactions utilisateur restreintes, dans laquelle le chemin de transit (T) est déterminé de manière à ne pas croiser le chemin de transit (T) associés à l'un quelconque des dispositifs d'authentification(100') identifiés par les interactions utilisateur restreintes et/ou de manière à ce que le chemin de transit (T) ne comprenne pas de section(s) de la zone de contrôle (A) où se trouve(nt) l'un quelconque des dispositifs d'authentification (100') identifiés par les interactions utilisateur restreintes.

11. Procédé selon l'une des revendications 1 à 10, comprenant en outre:
- déterminer de manière répétée, à l'aide du ou des dispositifs de détection UWB (10), l'emplacement du dispositif d'authentification (100) par rapport à un ou plusieurs points de contrôle (C1-n, C1.1-Cm.n) dans la zone de contrôle (A) en traitant les propriétés du signal d'une ou plusieurs transmissions à bande ultra large ; et
- appliquer le flux de personnes à l'intérieur de la zone de contrôle (A).

12. Procédé selon la revendication 11, dans laquelle l'application du flux de personnes à l'intérieur de la zone de contrôle (A) comprend la comparaison de l'emplacement du dispositif d'authentification (100) avec les données de contrôle de flux et la génération d'un signal d'alerte indiquant un écart entre l'emplacement du dispositif d'authentification (100) et les données de contrôle de flux.

13. Procédé selon la revendication 11 ou 12, dans laquelle le contrôle du flux de personnes dans la zone de contrôle (A) comprend la génération de signaux de contrôle pour restreindre les mouvements d'un utilisateur du dispositif d'authentification (100) entre les sections de la zone de contrôle (A) conformément aux données de contrôle de flux, comprenant:
- signaux de contrôle pour le contrôle d'une ou plusieurs barrières disposées dans la zone de contrôle (A) ; et/ou
- signaux de contrôle pour le contrôle des moyens de transport à l'intérieur de la zone de contrôle (A).

14. Dispositif de détection UWB (10), comprenant une unité de traitement (14) et un ou plusieurs transcepteurs à bande ultra large (12), le dispositif de détection UWB étant configuré pour mettre en œuvre le procédé selon l'une des revendications 1 à 13.

15. Système de contrôle du flux de personnes (1) destiné à contrôler le flux de personnes à l'intérieur d'une zone de contrôle (A), comprenant une unité de traitement (14) et un ou plusieurs dispositifs de détection UWB (10), chaque dispositif de détection UWB (10) comprenant un ou plusieurs transcepteurs à bande ultra large (12), le système de contrôle de flux de personnes (1) étant configuré pour mettre en œuvre le procédé selon l'une des revendications 1 à 13.

16. Produit programme d'ordinateur comprenant des instructions exécutables par ordinateur qui, lorsqu'elles sont exécutées par une unité de traitement (14) d'un système de contrôle de flux de personnes (1) comprenant un ou plusieurs dispositifs de détection UWB (10), chaque dispositif de détection UWB (10) comprenant un ou plusieurs transcepteurs à bande ultra large (12), amène le système de contrôle de flux de personnes (1) à mettre en œuvre le procédé selon l'une des revendications 1 à 13.
